# EUROPEAN PATENT SPECIFICATION

(11) **EP 0 434 067 B1**
(45) Date of publication and mention of the grant of the patent: **03.09.1997**
(21) Application number: 90124972.2
(22) Date of filing: 20.12.1990
(51) Int. Cl.: C08K 5/13, C08L 37/00

(54) **Polymer compositions**
Polymermassen
Compositions de polymères

(30) Priority: 21.12.1989 JP 334449/89
(43) Date of publication of application: 26.06.1991
(73) Proprietor: KURARAY Co. LTD., Okayama 710 (JP)
(72) Inventor: Matsumoto, Mitsuo, Okayama 710 (JP); Sanda, Fumio Sun-mall Tsukumi 101,, Kanagawa 242 (JP)
(74) Representative: VOSSIUS & PARTNER

(56) References cited:
- PATENT ABSTRACTS OF JAPAN, vol. 14 (P-1136)[538], 28th November 1990; & JP-A-2 230 201 (KURARAY K.K.) 12-09-1990

## Description

The present invention relates to polymer compositions comprising a polymer having a tetrahydrofuran skeleton, a plasticizer and optionally further additives.

Various moldings obtainable from the polymer compositions of the present invention are superior in mechanical strength and flexibility and besides, the moldings themselves have decomposability with time due to decomposition of the polymer constituting the same in atmosphere, soil and water. Thus, the polymer compositions of the present invention are very useful as materials for disposable moldings.

As a polymer having a tetrahydrofuran skeleton, there have been known polymers obtained by cationic polymerization of 2,3-dihydrofuran, 2,3-dihydro-5-methylfuran, etc. [Journal of Chemical Society, p. 3766 (1954); Polymer Journal, 16, 415 (1984)].

In recent years, the proportion of plastic in wastes has been on the constant increase, and various problems in connection with the waste plastic, such as shortage of dumping site and high-performance incinerator, concern about noxious material generated by the incineration of plastic, problems in the aspect of fine view, has been rapidly drawing public attention. Thus, provision of plastic products which decompose quickly and do not cause environmental pollution has been a public demand.

The object of the invention is to provide polymer compositions capable of forming disposable plastic moldings which have excellent mechanical properties as well as decomposability with time.

This object could be achieved on the basis of the finding that moldings such as films from the polymer composition prepared by adding a plasticizer and optionally further additives to a polymer having a tetrahydrofuran skeleton,
have excellent mechanical strength, flexibility and strong resistance to bending, and that the shape of the moldings disintegrates due to gradual lowering of mechanical properties caused by the decomposition of the polymer comprised therein with time in atmosphere, soil, or water.

Thus, the invention provides a polymer composition comprising a polymer (A) having a repeating structure unit represented by the formula (I) in the main chain 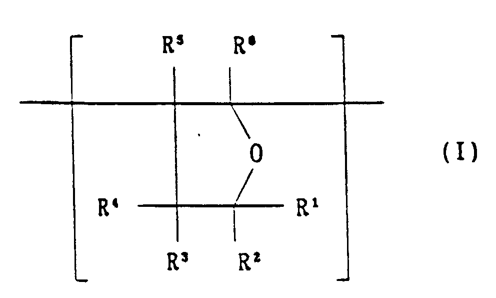 wherein R¹, R², R³, R⁴, R⁵ and R⁶ are respectively a hydrogen atom or a lower alkyl; a plasticizer, and optionally further additives.

The lower alkyl represented by R¹, R², R³, R⁴, R⁵ and R⁶ in the repeating unit (I) described above (hereinafter referred to generally as R¹⁻⁶) has 1 to 6, preferably to 4 carbon atoms and include, for example, methyl, ethyl, propyl, isopropyl and butyl. It is preferable that all of R¹⁻⁶ be a hydrogen atom or methyl and more preferable that all of R¹⁻⁶ be a hydrogen atom or an optional one of R¹⁻⁶ be methyl and the rest be a hydrogen atom.

As the preferred repeating unit (I) affording the polymer (A) in the invention, the following can be mentioned.

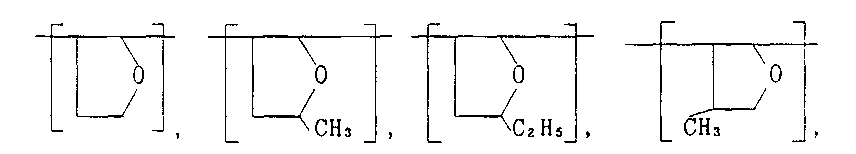

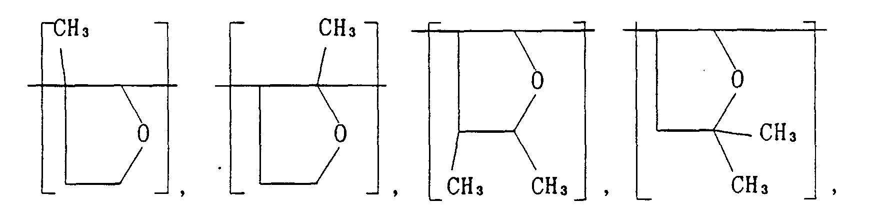

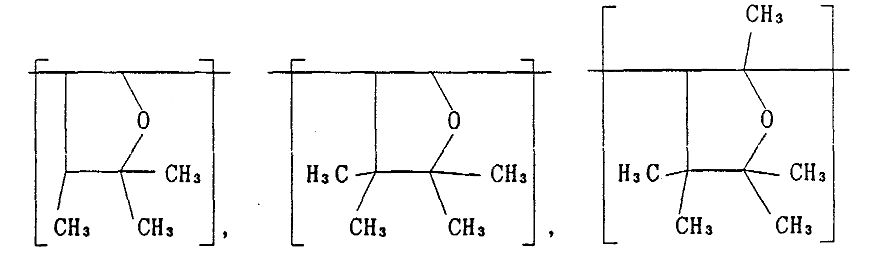

In the present invention, the polymer (A) may include repeating unit(s) (II) and/or (III) of the following formulas, which has the effect that the decomposition rate of the polymer (A) can be accelerated depending on the amount contained. 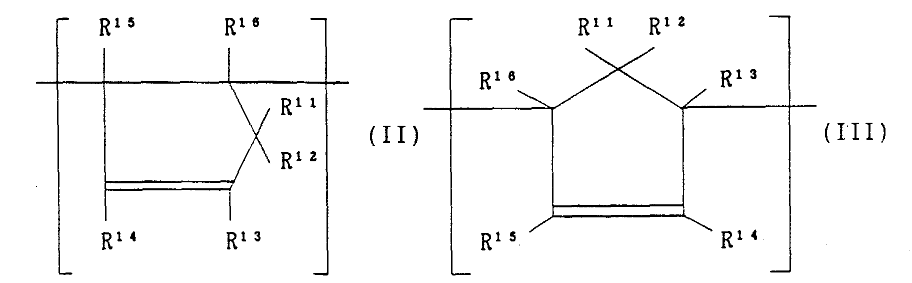 wherein R¹¹, R¹², R¹³, R¹⁴, R¹⁵ and R¹⁶ are respectively a hydrogen atom or a lower alkyl.

When the repeating unit(s) (II) and/or (III) are(is) contained, the molar ratio of the repeating unit (I) and the repeating unit(s) (II) and/or (III) is in the range between 20:80 and 95:5, preferably 30:70 and 90:10.

The lower alkyl represented by R¹¹, R¹², R¹³, R¹⁴, R¹⁵ and R¹⁶ in the repeating units (II) and (III) described above (hereinafter referred to generally as R¹¹⁻¹⁶) has 1 to 6, preferably 1 to 4 carbon atoms and include, for example, methyl, ethyl, propyl, isopropyl and butyl. It is preferable that all of R¹¹⁻¹⁶ be a hydrogen atom or methyl and more preferable that all of R¹¹⁻¹⁶ be a hydrogen atom or an optional one of R¹¹⁻¹⁶ be methyl and the rest be a hydrogen atom.

As the repeating units (II) and (III), the following can be shown.

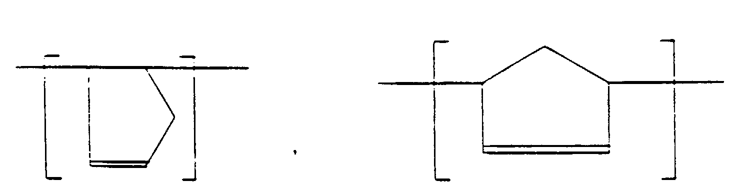

The polymer (A) may have only one species or 2 or more species of those exemplified above as the repeating unit (I). Further, the polymer (A) may have a structure unit other than the units (I), (II) and (III) as long as it is not detrimental to the physical properties of the polymer (A). That is, the polymer (A) may have a structure unit such as the unit (V) shown below in a small amount. 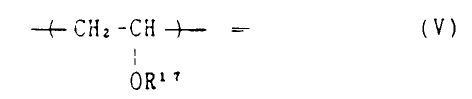 wherein R¹⁷ is a lower alkyl having 1 to 6 carbon atoms such as methyl, ethyl, propyl, isopropyl and n-butyl.

As the polymer (A), those having a number-average molecular weight (relative to standard polystyrene) determined by gel permeation chromatography (hereinafter abbreviated as GPC) of 5,000 - 200,000 are preferred.

The polymer (A) normally possesses a glass transition temperature of not less than 120°C, sometimes not less than 125°C depending on the species of the repeating unit (I). In addition, various moldings obtained from the polymer (A) are transparent with sufficient mechanical properties upon forming.

The polymer (A) can be prepared by subjecting a compound of the formula (VI) 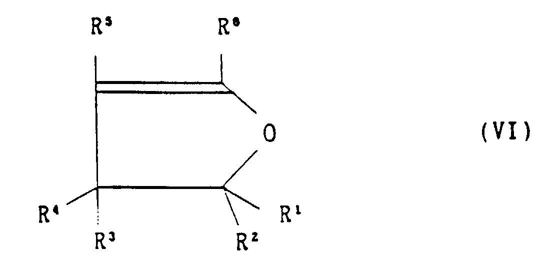 wherein R¹⁻⁶ are as defined above, to a known cationic polymerization reaction in the presence of a suitable polymerization initiator.

Examples of the polymerization initiator employed in the production of the polymer (A) include proton acids such as hydriodic acid; metal oxides such as chrome oxide and molybdenum oxide; halogens such as iodine, bromine and bromoiodine; boron halides such as boron fluoride and boron trifluoride ether complex; metal halides such as aluminium chloride. aluminium bromide, titanium tetrachloride, titanium tetrabromide, tin tetrachloride and iron trichloride; organometallic compounds such as ethylaluminum dichloride, diethylaluminum chloride, diethylaluminum bromide and diethylzinc; carbonium ion salts such as triphenylmethyl antimony hexachloride and triphenylmethyl tin pentachloride. The polymerization initiator is used in an amount of 0.01 - 10 mole%, preferably 0.05 - 2 mole% relative to the compound of the formula (VI).

The polymerization temperature ranges from -200°C to 100°C, preferably from -100°C to 50°C. The polymerization is normally conducted in an inert gas atmosphere such as nitrogen, argon and helium. The polymerization can be conducted in the absence of a solvent. However, it is preferably conducted in the presence of a solvent such as aromatic hydrocarbons (e.g. benzene. toluene. xylene and mesitylene), aliphatic hydrocarbons (e.g. hexane, heptane and octane), alicyclic hydrocarbons (e.g. cyclohexane and cyclooctane), hydrocarbon halides (e.g. methylene chloride, chloroform and tetrachlorethylene), etc. in view of removal of reaction heat and easy handling of the polymer produced . Depending on the kinds of the polymerization initiator employed, it is sometimes useful to use ethers such as diethylether, dibutyl ether. dioctyl ether, ethylene glycol dimethyl ether, diethylene glycol dimethyl ether and tetrahydrofuran; esters such as methyl acetate, ethyl acetate, isopropyl acetate and methyl benzoate; and ketones such as acetone, methyl ethyl ketone and methyl isobutyl ketone, as appropriate in addition to the above-mentioned solvents to carry out the polymerization effectively. The reaction normally proceeds in 1 second to 100 hours. After the polymerization reaches the desired degree, it is terminated by a known method, and the polymer is isolated and purified.

The polymer having the repeating unit(s) (II) and/or (III) can be produced by subjecting a mixture of a compound of the formula (VI) above and a compound of the following formula (VII) 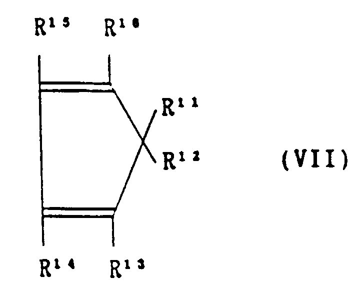 wherein R¹¹⁻¹⁶ are as defined above, to a polymerization in the same conditions as described above.

An optional additive may be a phenol compound of the formula (IV) 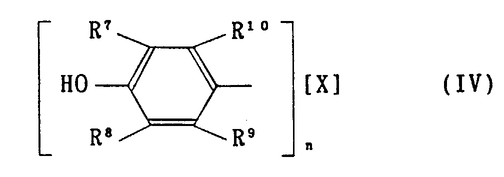 wherein R⁷, R⁸, R⁹ and R¹⁰ are respectively a hydrogen atom or a lower alkyl, at least one of R⁷ and R⁸ is tert-butyl, X is a hydrogen atom or an organic group and n is an integer of 1 to 4 corresponding to the number of the bonding site of [X].

In the formula (IV) showing the phenol compounds, the lower alkyl represented by R⁷, R⁸, R⁹ and R¹⁰ has 1 to 6, preferably 1 to 4 carbon atoms and can be exemplified by methyl, ethyl, n-propyl, isopropyl, n-butyl, sec-butyl and tert-butyl.

At least one of R⁷ and R⁸ is tert-butyl, and it is preferable that both be tert-butyl. Examples of an organic group represented by X include the following groups of 1 to 4 valences.
-CH₃, -CH₂CH₃, -CH₂CH₂CH₃, -CH₂CH₂CH₂CH₃, 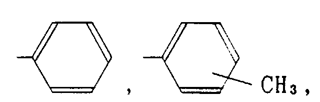 -CH₂CH₂COOC₁₈H₃₇, 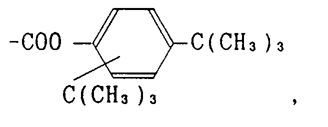 -CH₂-, -CH₂CH₂-, 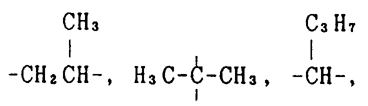 -CH₂CH₂COO(CH₂)₆OCOCH₂CH₂-, -CH₂CH₂CONHNHCOCH₂CH₂-, -CH₂CH₂CONH(CH₂)₆NHCOCH₂CH₂-, -CH₂CH₂COOCH₂CH₂NHCOCONHCH₂CH₂OCOCH₂CH₂-,

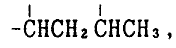

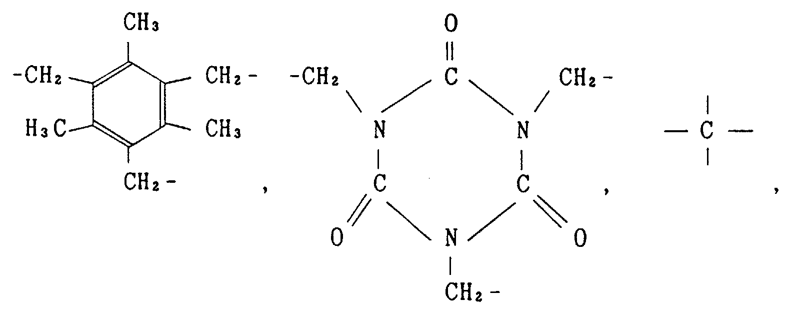

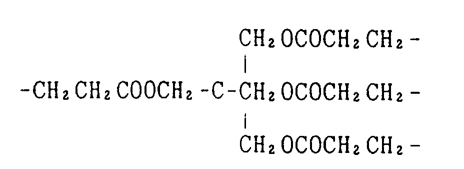

As the preferable phenol compounds, the following can be mentioned.

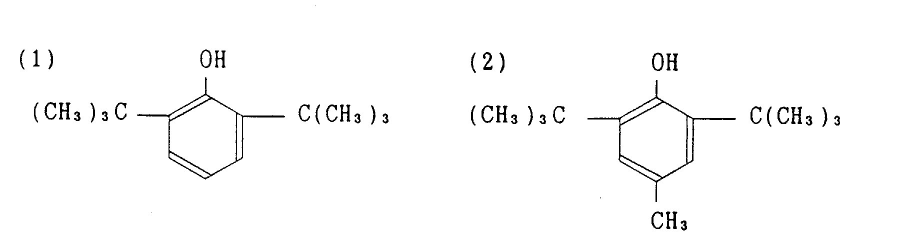

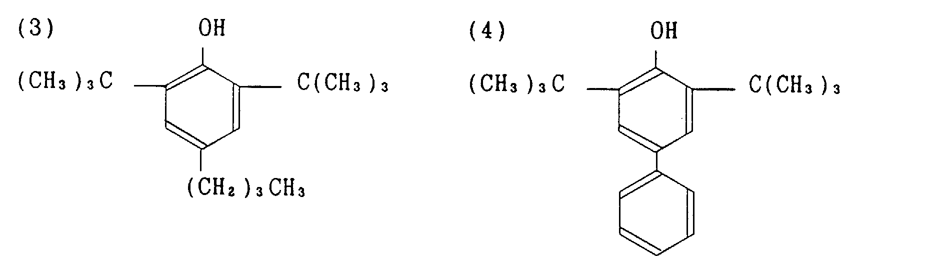

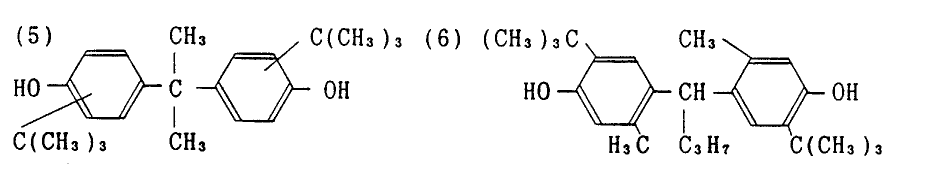

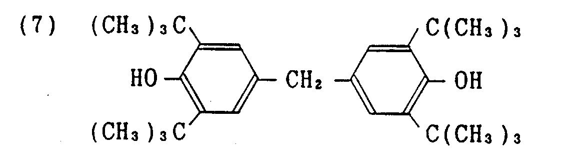

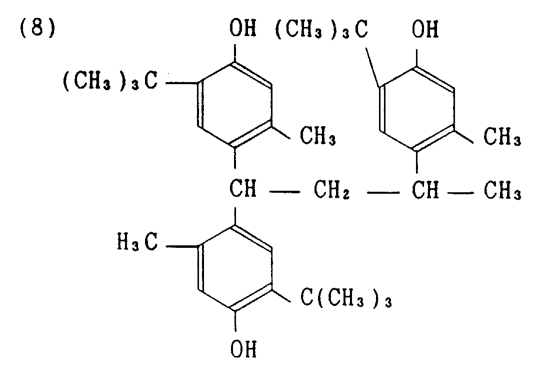

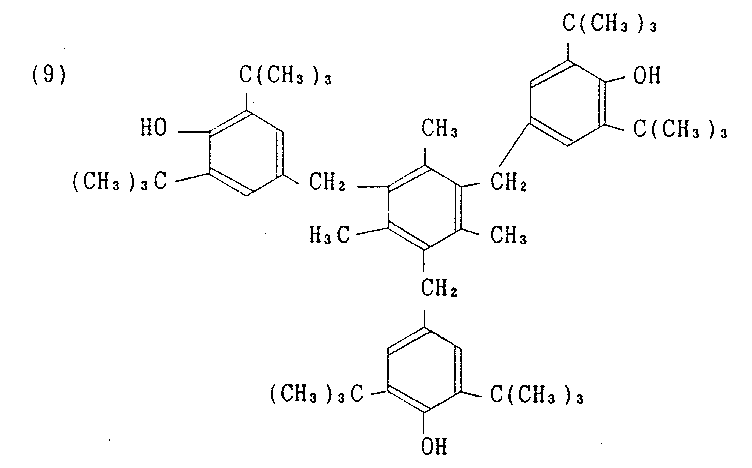

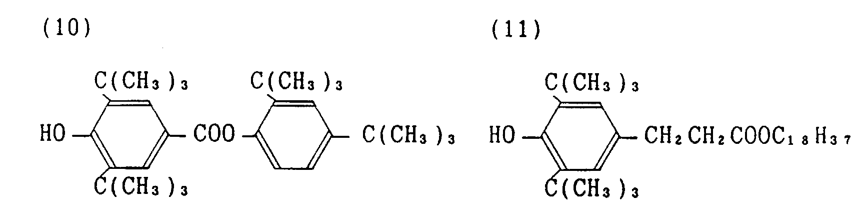

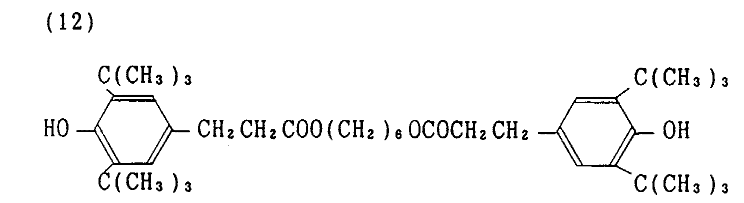

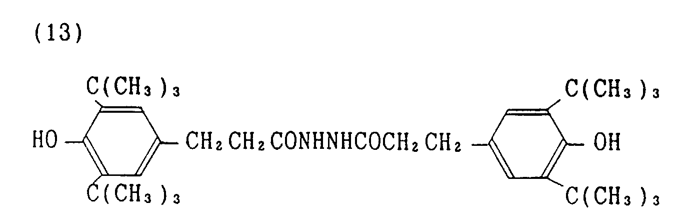

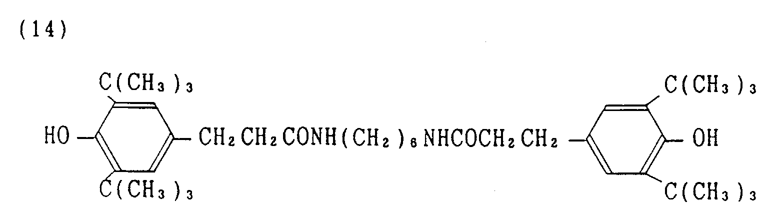

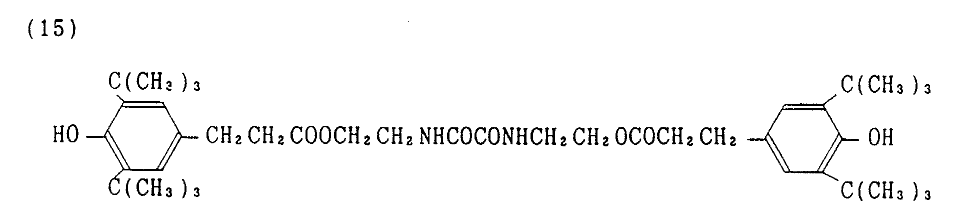

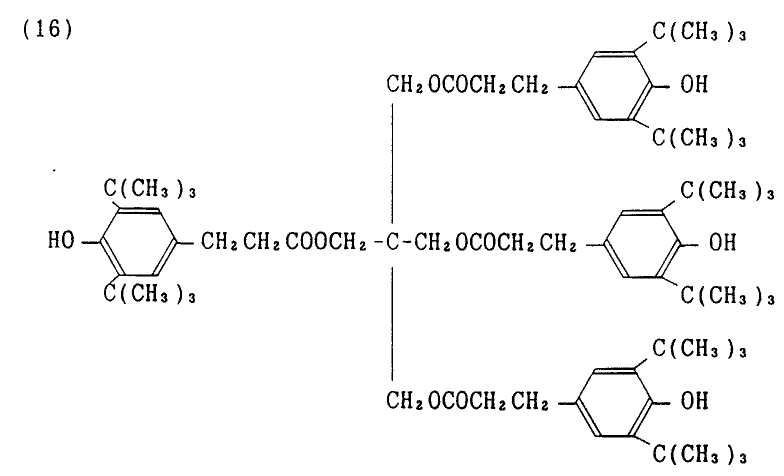

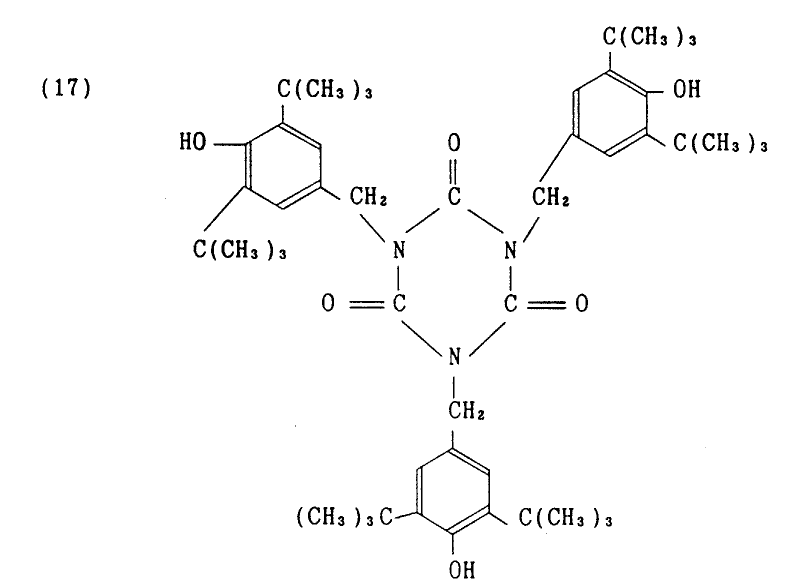

Specifically preferred compounds among above are shown below.

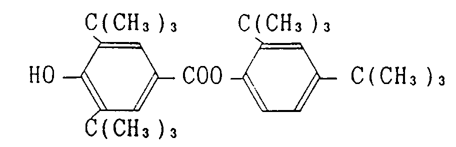

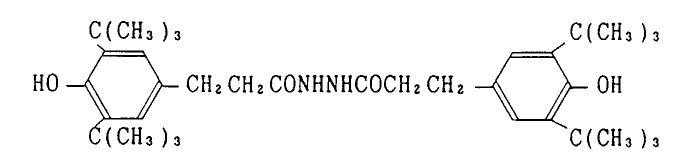

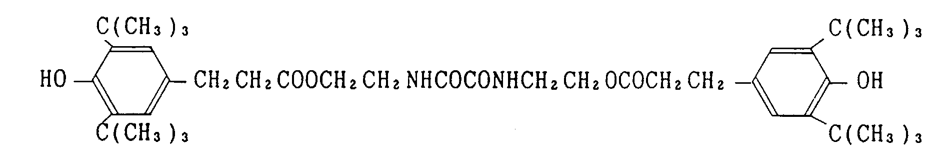

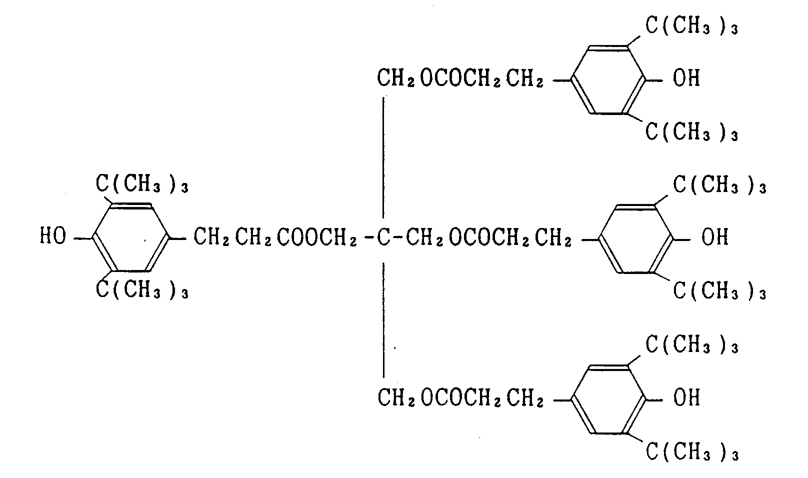

The proportion of the phenol compound to the polymer (A) is normally in the range between 10 and 50,000 ppm, preferably between 50 and 25,000 ppm and more preferably between 100 and 15,000 ppm. In case where the proportion is below 10 ppm, age stability of the polymer (A) tends to show no significant improvement, and in case where it is beyond 50,000 ppm, age stability of the polymer (A) does not improve sufficiently as compared with that in case of the above-mentioned ppm range, but mechanical properties or optical properties of various moldings of the obtained polymer composition affords tend to lower, resulting in disadvantageous high production cost of the polymer composition.

The preparation of the polymer composition comprising a further additive, e.g. a phenol compound, is conducted by mixing the polymer (A) with a phenol compound by a method selected *ad libitum.* The mixing methods include, for example, a method wherein the solid-state polymer (A) is mechanically mixed with a phenol compound, a method wherein a phenol compound is mixed with the polymer (A) dissolved in a suitable solvent, followed by removal of the solvent, a method wherein the polymer (A) and a phenol compound are independently dissolved in a suitable solvent and mixed, followed by removal of the solvent, and a method wherein the polymer (A) is prepared in a molten state and mixed with a phenol compound. Further, a phenol compound may be mixed with a reaction mixture containing the polymer (A) obtained from a compound of the formula (VI) described above, and the polymer composition comprising the polymer (A) and the phenol compound is isolated.

Examples of the plasticizer used in the present invention include phthalate plasticizers such as dimethyl phthalate, diethyl phthalate, di-n-butyl phthalate, diisobutyl phthalate, dihexyl phthalate, dicyclohexyl phthalate, diheptyl phthalate. di-n-octyl phthalate, di-2-ethylhexyl phthalate. diisooctyl phthalate. dinonyl phthalate. di-n-decyl phthalate. diisodecyl phthalate, diundecyl phthalate, di-n-lauryl phthalate, di-tridecyl phthalate, methyloleyl phthalate, butyloctyl phthalate. butylisodecyl phthalate. butyllauryl phthalate. n-octyl n-decyl phthalate, isooctylisodecyl phthalate, butylbenzyl phthalate, butylphthalyl butylglycolate, ethylphthalyl ethylglycolate and di-2-ethylhexyl isophthalate ; trimellitate plasticizers such as tri-2-ethylhexyl trimellitate, tri-n-octyl trimellitate. triisooctyl trimellitate and triisodecyl trimellitate; pyromellitate plasticizers such as tetra-n-octyl pyromellitate and tetra-2-ethylhexyl pyromellitate; fatty acid ester plasticizers such as di-2-ethylhexyl succinate. diisodecyl succinate, di-n-octyl adipate. di-2-ethylhexyl adipate, di-3,5,5-trimethylhexyl adipate, di-n-decyl adipate. diisodecyl adipate, dicapryl adipate, dimethoxyethyl adipate. dibutoxyethyl adipate, di-2-ethylhexyl azelate, diisodecyl azelate, dibutyl sebacate, di-2-ethylhexyl sebacate, diisodecyl sebacate, di-2-ethylhexyl dodecanedioate, dioctyl brassidate, di-n-octyl tetrahydrophthalate, di-2-ethylhexyl tetrahydrophthalate, diisodecyl tetrahydrophthalate, and tributyl acetylcitrate; phosphate ester plasticizers such as tributyl phosphate, tributoxyethyl phosphate, trioctyl phosphate, diphenyloctyl phosphate, tricresyl phosphate, diphenyl cresyl phosphate, triphenyl phosphate and diphenyl isopropylphenyl phosphate; polyvinyl ether plasticizers such as polyvinyl methyl ether, polyvinyl butyl ether and polyvinyl isobutyl ether; polyester plasticizers such as those obtained in condensation polymerization of adipic acid with diols (e.g. ethylene glycol, 1,4-butanediol and neopentylglycol ); epoxy plasticizers such as epoxy soybean oil, epoxy linseed oil, epoxy fish oil, epoxy middle-chain fatty acid ester, fatty acid ester of epoxy tall oil, epoxy castor oil, epoxy sunflower oil, fatty acid ester of epoxy linseed oil, epoxy polybutadiene, methyl epoxystearate, butyl epoxystearate, 2-ethylhexyl epoxystearate, octyl epoxystearate, stearyl epoxystearate, tris(epoxypropyl)isocyanurate, 3-(2-xenoxy)-1,2-epoxypropane, bisphenol A diglycidyl ether, vinylcyclohexene diepoxide and condensation polymers such as a polymer of 2,2-bis(4-hydroxyphenyl)propane and epichlorohydrin. There may be used only one species, or 2 or more species of the plasticizers may be mixed for use.

Specifically preferred plasticizers include phthalate plasticizers and trimellitate plasticizers.

The proportion of the plasticizer is normally in the range of 1 - 80 weight parts, preferably 5 - 50 weight parts, and more preferably 10 - 30 weight parts per 100 weight parts of the polymer (A). In case where the proportion of the plasticizer is below 1 weight part, the flexibility of the various moldings which the polymer composition thus obtained affords is not sufficient, while in case where it is beyond 80 weight parts, the various moldings which the polymer composition thus obtained affords become too soft, resulting in greasiness.

The preparation of a polymer composition is conducted by mixing the polymer (A) with a plasticizer by a method selected *ad libitum.* The mixing methods include, for example. a method wherein a plasticizer is mixed with the polymer (A) dissolved in suitable solvents, followed by removal of the solvent, a method wherein the polymer (A) and a plasticizer are independently dissolved in a suitable solvent and mixed, followed by removal of the solvent, a method wherein the polymer (A) is made into a molten state and mixed with a plasticizer, and a method wherein a solid plasticizer is mechanically mixed with the polymer (A). Further, a plasticizer may be mixed with a reaction mixture containing the polymer (A) obtained from the compound of the formula (VI) described above and the polymer composition comprising the polymer (A) and the plasticizer is isolated.

The polymer compositions of the present invention may further contain thermoplastic polymers, thereby improving the mechanical properties of said composition.

The thermoplastic polymer [hereinafter abbreviated as polymer (B)] is those possessing thermoplasticity in the temperature range between 50°C and 320°C. Examples of the polymer (B) include polyolefins such as polyethylene, polypropylene, ethylene-propylene copolymer, polymethylpentene, ethylene-octene copolymer and polystyrene; polyamides such as nylon 6 and nylon 66; polyesters such as polyethylene terephthalate, polybutylene terephthalate and polyarylate ; polyvinyl alcohol; ethylene-vinyl alcohol copolymer; polyacrylonitrile; acrylonitrile copolymer; polyvinyl chloride; polyvinylidene chloride; polymethyl methacrylate and polycarbonate. Among those, polyolefins are preferable in view of cost, mechanical properties of the films or sheets or containers obtained therefrom, or the like.

As the polymer (B), there may be used only one species, or 2 or more species may be mixed for use.

The weight ratio of the polymer (A) and the polymer (B) is in the range between 5:95 and 95:5, preferably 20:80 and 80:20.

The polymer compositions of the invention may contain various additives such as lubricants. pigments. dyes. antistatic agents, and ultraviolet light absorbers, if necessary.

The moldings comprising the polymer compositions of the present invention become unable to maintain their shape since the polymer (A) decomposes with time in atmosphere, soil or water, leading to a decrease of the molecular weight, and the mechanical properties of the moldings lower gradually. Thus, the polymer compositions of the present invention are very useful as materials for the disposable moldings. As the moldings, there may be mentioned films or sheets (e.g. those for various packagings, building materials, electrical components and optical components), tapes (e.g. those for binding racks and stems of fruit-trees such as grape, those for binding stems of vegetables for inducement, those for grafting which are used at the conjugation site of a rootstock and a scion), bands (e.g. those for placing bags for protection against fruit moths), fibers, products made of said fibers (e.g. papers, nonwoven fabrics, knit fabrics and fiber sheets made of nonwoven fabric containing resin ), containers (e.g. boxes, cartons, sacks, cups, bottles, tubs and pots), and indicators [those capable of detecting change of appearance or lowering of mechanical strength of the polymer (A), which is a raw material, by viewing or touching].

The moldings can be produced by a method known per se selected according to the objective moldings.

### EXAMPLES

The invention is hereinafter described in detail by illustrating the examples. The physical properties were determined by the following methods.
① Number-average molecular weight and molecular weight distribution were determined by GPC (relative to standard polystyrene).
② Glass transition temperature was measured by a differential thermal analysis (in nitrogen, rate of temperature rise : 10°C/min.).
③ Tensile strength and tensile modulus were measured with a tensiometer at a grip distance of 30 mm and tension rate of 1 mm/min.
④ Light transmission was measured at a wavelength of 400 nm using a spectrophotometer.

### Reference Example 1

After sufficient displacement of a 10 ℓ-glass vessel equipped with a mechanical stirrer, with a dry nitrogen gas, anhydrous toluene (7 ℓ), anhydrous ethyl acetate (700 ml) and ethyl aluminum dichloride in n-hexane (concentration : 1 mole/ℓ, 60 ml) were placed therein, followed by cooling to 0°C. Thereto was gradually added anhydrous 2,3-dihydrofuran (1400 g) over 4 hours while stirring. After stirring 2 hours at 0°C, 1N ammonia water in methanol (233 ml) was added to the reaction mixture for termination of the polymerization. Thereafter, toluene (7 ℓ) was mixed therewith, and the resulting mixture was dropwise added to methanol (70 ℓ), and subjected to reprecipitation by a conventional method to give 1330 g of white product. The number-average molecular weight of the obtained product was 150,000 and the molecular weight distribution was 1.7.

The product was prepared into a chloroform-d solution and the NMR spectrum thereof was measured by ¹H-NMR. As a result. there were found 2 absorptions occupying the same area on the spectrum at 1.9 ppm and 3.8 ppm. The latter absorption can be assigned to protons of methyne and methylene adjacent to oxygen and the former can De assigned to protons of methyne and methylene other than the above.

The product was dissolved in tetrahydrofuran, and the resulting solution was then prepared into an 8 µm-thick film on a Teflon sheet. The infrared absorption spectrum thereof was measured, and there were found absorptions at wave numbers 910 cm⁻¹ and 1,060 cm⁻¹ attributable to -C-O-C-, as in the case with 2,3-dihydrofuran. Note that the absorption caused by the double bond at 1,630 cm⁻¹ in the case of 2,3-dihydrofuran had disappeared.

Based on the above results, it was confirmed that the product was a polymer having the following repeating unit. wherein 2,3-dihydrofuran had been polymerized by endocyclic double bonds without opening the 5-membered ring.

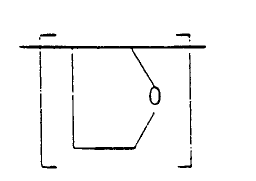

The glass transition temperature of the polymer was 140°C.

### Reference Example 2

The same polymerization and isolation as in Reference Example 1 except that a mixture of 2,3-dihydrofuran (980 g) and 2,3-dihydro-2,2-dimethylfuran (420 g) was used in place of 2,3-dihydrofuran (1400 g) was conducted to give 1,340 g of a white product. The analysis by ¹H-NMR confirmed that the product was a polymer comprising 68 weight% of the following repeating unit (VIII) and 32 weight% of the following repeating unit (IX).

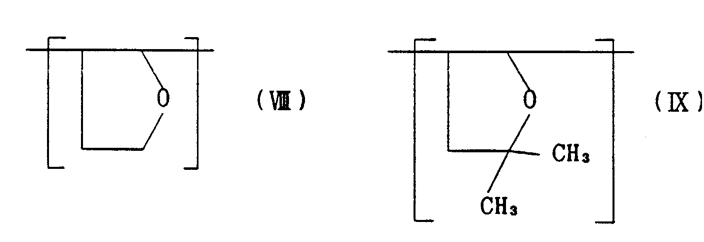

The glass transition temperature of the polymer was 152°C.

### Example 1

The polymer (20 g) obtained in Reference Example 1 and di-2-ethylhexyl phthalate (6 g) were dissolved in toluene (200 ml), and the toluene was removed by a rotary evaporator. The polymer composition thus obtained was formed into a film of 100 mm × 100 mm × 0.1 mm by a thermal pressing machine (Shinto Kinzoku Kogyosho) at 280°C and at 50 kg/cm². The film was flexible and resistant to bending. The glass transition temperature of the film was 43°C. The tensile strength was 2.4 kg/mm², the tensile modulus was 127 kg/mm² and the light transmission was 86%. The film was subjected to irradiation for 200 hours in a sunshine weatherometer. As a result. the tensile strength decreased to as low as 20% of before the irradiation. The film was left outdoor for 40 days, and its original shape was almost destroyed.

### Example 2

The polymer (50 g) obtained in Reference Example 1 and di-n-octyl phthalate (5 g) were mixed and kneaded in Labo Plastomill (Toyo Seiki Seisakusho, 20R-200 type) at 240 °C for 10 minutes. The thus obtained polymer composition was formed into a film in the same manner as in Example 1. The film was flexible and resistant to bending. The tensile strength was 4.5 kg/mm² and the tensile modulus was 197 kg/mm². The film was subjected to irradiation for 200 hours in a sunshine weatherometer. As a result, the tensile strength decreased to as low as 24% of before the irradiation. The film was left indoor for 120 days, which induced decrease of the molecular weight to 31% of before leaving. Further, the film was left in the ground for 100 days, which reduced the molecular weight to 25% of before leaving.

### Example 3

The same procedure as in Example 1 except that the polymer (20 g) obtained in Reference Example 2 was used in place of the polymer (20 g) obtained in Reference Example 1 and triisooctyl trimellitate (5 g) was used in place of the di-2-ethylhexyl phthalate (2 g), was repeated to give a polymer composition, which was then formed into a film. The film was flexible and resistant to bending. The film showed the tensile strength of 2.0 kg/mm², the tensile modulus of 197 kg/mm² and the light transmission of 85%. Subsequently, the film was irradiated in a sunshine weatherometer for 200 hours. As a result, the molecular weight decreased to 18% of before the irradiation.

### Example 4

A film formed in the same manner as in Example 1 was slit into tapes of 100 mm × 10 mm. The thus obtained tape was used as a binding tape. Using a stem of a pumpkin before having a true leaf as a rootstock, a stem of a tomato nursery stock having 1 or 2 true leaves was grafted. Two weeks later, the pumpkin and the tomato took roots, and 1 month later, the tape had fallen down by itself from the graft part.

### Reference Example 3

The polymer obtained in Reference Example 1 was formed into a film of 100 mm × 100 mm × 0.2 mm by a thermal pressing machine (Shinto Kinzoku Kogyosho) at 280°C and at 50 kg/cm². The film showed the tensile strength of 5.2 kg/mm² and the tensile modulus of 220 kg/mm². The film was then subjected to a biaxial stretching by a biaxial stretching apparatus (Toyo Seiki Seisakusho, X6H-type) by 2 × 2 at 150°C and at a rate of 0.5 m/min. to give a 49 µm-thick stretched film. The film had a smooth surface and fine transparency with the total light transmission of 89%. The film showed the tensile strength of 7.8 kg/mm², the tensile modulus of 317 kg/mm² and the elongation at breakage of 7.0%. The mechanical properties were measured at two directions crossing at right angles and almost the same results were obtained.

A bag of 8 cm × 5 cm was made of the stretched film. An outdoor exposure test of the bag was conducted from May to June and the results are summarized in Table 1.

### Example 5

To the polymer (10 g) obtained in Reference Example 1 was added tetrakis[methylene-3-(3',5'-di-tert-butyl-4'-hydroxyphenyl)propionate]methane [Compound (16), 0.1 g] under stirring in a mixer, followed by forming and stretching as in Reference Example 3 to give a film. The film had a smooth surface and fine transparency with the light transmission of 90%. The film showed the tensile strength of 7.9 kg/mm², the tensile modulus of 320 kg/mm² and the elongation at breakage of 7.2%. The mechanical properties were measured at two directions crossing at right angles and almost the same results were obtained.

A bag was prepared from this film and subjected to a decomposability test in the same manner as in Reference Example 3. The results are summarized in Table 1.

### Reference Example 4

A bag was prepared using the polymer obtained in Reference Example 2 and was subjected to a decomposability test in the same manner as in Reference Example 3. The results are summarized in Table 1.

**Table 1**

| Example or Ref. Ex. | Test time (days) | Light transmission (%) | Tensile strength (kg/mm²) |
|---|---|---|---|
| Reference Example 3 | 0 | 89 | 7.8 |
| | 30 | 43 | 3.7 |
| | 50 | Crack occurs, | unmeasurable |
| Example 5 | 0 | 90 | 7.9 |
| | 30 | 88 | 5.1 |
| | 50 | 87 | 3.9 |
| Reference Example 4 | 0 | 88 | 6.7 |
| | 30 | 50 | 4.7 |
| | 50 | Crack occurs, | unmeasurable |

### Example 6

A polymer composition was obtained by mixing the polymer (number-average molecular weight : 83,100, 10 g) obtained in accordance with Reference Example 1 and tetrakis[methylene-3-(3',5'-di-tert-butyl-4'-hydroxyphenyl) propionate]methane [Compound (16), 0.1 g] under stirring in a mixer.

The thus-obtained polymer composition was formed into a plate of 100 mm × 20 mm × 1 mm by a thermal pressing machine, which was then left standing in a Geer oven.

Thereafter, the light transmission and the bending strength were measured. The results are as follows.

| | light transmission (%) at 400 nm | bending strength (kg/cm²) |
|---|---|---|
| before leaving | 82 | 1250 |
| after leaving | 80 | 1230 |

In the same manner as above, a specimen was obtained from a polymer not containing tetrakis[methylene-3-(3',5'-di-tert-butyl-4'-hydroxyphenyl)propionate]methane [Compound (16)]. Then, the specimen was left standing in a Geer oven at 100°C for 200 hours. The light transmission and the bending strength were 51% and 892 kg/cm², respectively.

### Example 7

The same procedure as in Example 6 except that the compounds (10) and (16) were used in place of the compound (16) in an amount of 5,000 ppm respectively, was repeated to give specimens. The specimens were then left standing in a Geer oven at 100 °C for 200 hours or subjected to irradiation in a sunshine weatherometer for 200 hours. Thereafter, the light transmission at 400 nm and the bending strength were measured. The results are as follows.

| | light transmission (%) at 400 nm | bending strength (kg/cm²) |
|---|---|---|
| Geer oven | 80 | 1163 |
| Weatherometer | 82 | 1198 |

### Example 8

A polymer composition was prepared from the polymer (10 g) obtained in Reference Example 1 and the compound (15) (0.1 g) in the same manner as in Example 6. The thus obtained polymer composition was formed into a film of 100 mm × 100 mm × 0.1 mm by a thermal pressing machine, which was subjected to 100 hours' irradiation in a sunshine weatherometer. As a result, the molecular weight decreased to 58% of before the irradiation and the tensile strength decreased to 50% of before the irradiation. The film was left indoor for 300 days, which induced decrease of the molecular weight to 87% of before leaving.

Further, the same experiment was conducted using the polymer not containing the compound (15). The obtained molecular weight and tensile strength after the irradiation were 25% and 26% of before the irradiation, respectively.

### Example 9

A polymer composition was obtained from the polymer (50 g) obtained in Reference Example 1, di-n-octyl phthalate (20 g) and the compound (16) (0.5 g) in the same manner as in Example 1, and was then formed into a film. The film was left outdoor for 40 days, and the tensile strength decreased to 33% of before leaving.

## Claims

1. A polymer composition comprising (A) a polymer having a repeating structure unit of the formula (I) in the main chain 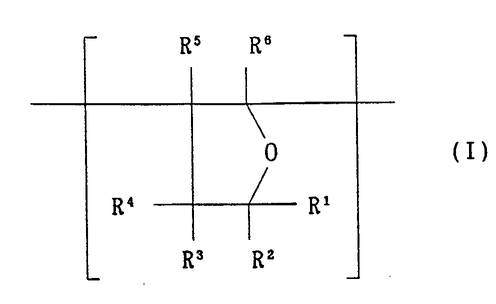 wherein R¹, R², R³, R⁴, R⁵ and R⁶ are respectively a hydrogen atom or a lower alkyl, (B) a plasticizer, and optionally further additives.

2. A polymer composition as claimed in Claim 1, which comprises 1 - 80 weight parts of a plasticizer per 100 weight parts of the polymer (A).

3. A polymer composition as claimed in Claim 2, wherein the plasticizer is at least one species selected from the group consisting of phthalate plasticizers, trimellitate plasticizers, pyromellitate plasticizers, fatty acid ester plasticizers, phosphate ester plasticizers, polyvinyl ether plasticizers, polyester plasticizers and epoxy plasticizers.

## Patentansprüche

1. Polymermasse, umfassend
(A) ein Polymer mit einer Grundstruktur der Formel (I) in der Hauptkette 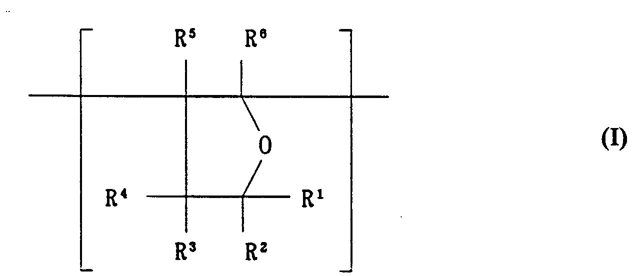 wobei R¹, R², R³, R⁴, R⁵ und R⁶ jeweils ein Wasserstoffatom oder einen Niederalkylrest bedeuten,
(B) einen Weichmacher und gegebenenfalls weitere Hilfsstoffe.

2. Polymermasse anch Anspruch 1, umfassend 1 bis 80 Gewichtsteile eines Weichmachers je 100 Gewichtsteilen des Polymers (A).

3. Polymermasse nach Anspruch 2, wobei der Weichmacher wenigstens ein Vertreter der Gruppe, bestehend aus Phthalat-Weichmachern, Trimellitat-Weichmachern, Pyromellitat-Weichmachern, Fettsäureester-Weichmachern, Phosphatester-Weichmachern, Polyvinylether-Weichmachern, Polyester-Weichmachern und Epoxy-Weichmachern, ist.

## Revendications

1. Composition de polymère comprenant (A) un polymère ayant un motif récurrent de formule (I) dans la chaîne principale 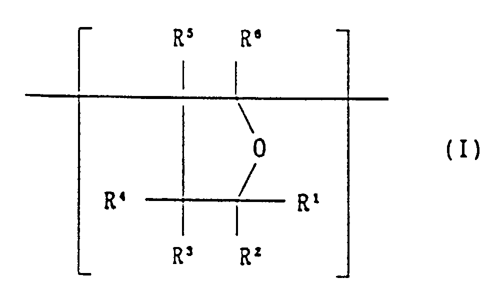 dans laquelle R¹, R², R³, R⁴, R⁵ et R⁶ représentent respectivement un atome d'hydrogène ou un groupe alkyle inférieur, (B) un plastifiant et éventuellement d'autres additifs.

2. Composition de polymère selon la revendication 1, qui comprend 1 - 80 parties en poids d'un plastifiant pour 100 parties en poids du polymère (A).

3. Composition de polymère selon la revendication 2, dans laquelle le plastifiant est au moins une espèce choisie dans le groupe comprenant les plastifiants de type phtalate, les plastifiants de type trimellitate, les plastifiants de type pyromellitate, les plastifiants de type ester d'acide gras, les plastifiants de type ester phosphate, les plastifiants de type polivinyl éther, les plastifiants de type polyester et les plastifiants de type époxy.
